# EUROPÄISCHE PATENTSCHRIFT

(11) **EP 1 018 227 B1**
(45) Veröffentlichungstag und Bekanntmachung des Hinweises auf die Patenterteilung: **27.06.2001**
(21) Anmeldenummer: 98955322.7
(22) Anmeldetag: 14.09.1998
(51) Int. Cl.: H04B 7/005

(54) **VERFAHREN ZUM SYNCHRONISIEREN EINES MOBILTEILS EINES NACH EINEM MULTIPLEX-VERFAHREN ARBEITENDEN MOBILFUNKSYSTEMS**
METHOD FOR SYNCHRONIZING A MOBILE COMPONENT OF A MULTIPLEX-OPERATED MOBILE RADIOTELEPHONE SYSTEM
PROCEDE PERMETTANT LA SYNCHRONISATION D'UN ELEMENT MOBILE D'UN SYSTEME RADIO-MOBILE FONCTIONNANT EN MULTIPLEX

(30) Priorität: 24.09.1997 DE 19742182
(43) Veröffentlichungstag der Anmeldung: 12.07.2000
(73) Patentinhaber: SIEMENS AKTIENGESELLSCHAFT, 80333 München (DE)
(72) Erfinder: SYDON, Uwe, D-40474 Düsseldorf (DE)
(86) Internationale Anmeldenummer: DE9802720
(87) Internationale Veröffentlichungsnummer: WO9916184

(56) Entgegenhaltungen:
- EP-A- 0 682 417
- GB-A- 2 293 947
- US-A- 5 528 623

## Beschreibung

Die Erfindung bezieht sich auf ein Verfahren zum Synchronisieren eines Mobilteils eines nach einem Multiplex-Verfahren arbeitenden Mobilfunksystems , bei welchem zumindest ein Dummy Bearer bestimmter Leistung von einer Basisstation ausgesendet wird, und seitens des Mobilteils ein Dummy Bearer gesucht wird, bis Synchronisation mit der Basisstation erreicht ist, wobei das Mobilteil ständig einen Meßwert für die Empfangsfeldstärke ermittelt.

Mobilfunksystem, welches nach einem Multiplex-Verfahren arbeitet, mit zumindest einer Basisstation und zumindest einem Mobilteil, bei welchem die Basisstation zur Aussendung zumindest eines Dummy Bearers in einem Kanal aus einer Anzahl von Kanälen eingerichtet ist, und bei welchem jeder Mobilteil einen HF-Teil, einen Burst Mode Controller und einen Mikrocontroller aufweist und dazu eingerichtet ist, einen Dummy Bearer geeigneter Identität zu suchen, bis es auf diesen Dummy Bearer aufsynchronisiert ist.

Die folgende Beschreibung bezieht sich vorwiegend auf ein DECT-Schnurlostelefonsystem, doch ist die Erfindung in gleicher Weise auf andere Mobilfunksysteme anwendbar, welche die hier vorausgesetzten Merkmale aufweisen.

Das DECT-System ist ein Frequency Division Multiple Access/Time Division Multiple Access-System (FDMA/TDMA) mit Time Division Duplex (TDD) in picozellularer Struktur, wobei das zur Verfügung stehende Frequenzband nach derzeit geltendem Standard in 10 Trägerfrequenzen aufgeteilt ist. Jeder dieser Träger hält 24 Zeitschlitze bereit, nämlich 12 für den Funkweg Basisstation-Mobilteil und 12 für den Funkweg Mobilteil-Basisstation. Nähere Einzelheiten des DECT-Systems sind zusammengefaßt in dem Artikel "Struktur des DECT-Standards", U. Pilger, Nachrichtentech., Elektron., Berlin 42 (1992) 1, Seiten 23 bis 29, zu entnehmen. Genaue Details finden sich in den auf DECT bezogenen ETSI-Standards, herausgegeben von dem European Telecommunications Standards Institute. Der Inhalt dieser Empfehlungen wird als für den Fachmann bekannt vorausgesetzt.

Nach dem Einschalten eines Mobilteils muß dieses zunächst eine Synchronisation mit einer Basisstation suchen. Zu diesem Zweck sendet jede Basisstation einen sogenannten Dummy-Bearer, der aus den Daten eines Zeitschlitzes besteht, wobei jedoch im B-Feld, dem Hauptteil des Datenfeldes (D-Feld) noch keine Daten übertragen werden. Zur Suche nach einem Dummy Bearer sucht das Mobilteil gemäß dem Stand der Technik zyklisch in dem gesamten Frequenzband nach einer Basisstation, welche auch eine geeignete Identität (Radio Fixed Part Identification) aufweisen muß. Bei mehreren geeigneten Basisstationen wird jene mit der größten Feldstärke selektiert, was auf Basis des sogenannten RSSI-Wertes (Radio Signal Strength Indicator) erfolgt. Die Steuerung der Suche erfolgt über den Burst Mode Controller, der für eine bestimmte Zeit, z.B. 40 ms beim sogenannten "slow hopping" auf einer ersten Frequenz auf geraden Zeitschlitzen und sodann auf ungeraden Zeitschlitzen nach Basisstationen sucht. Dagegen wird beim "fast hopping" sequentiell durchsucht. Dann wird die nächste Frequenz eingestellt und wieder, zunächst auf geraden und dann ungeraden Zeitschlitzen gesucht usf. Falls nach Durchlauf aller 10 Frequenzen keine Basis gefunden wurde, können verschiedene Algorithmen aktiviert werden, wonach der Suchvorgang in bestimmten Zeiträumen, die gegebenenfalls auch immer länger werden, wiederholt wird.

Bei Schnurlostelefonsystemen werden Mobilteile oft direkt in einer Ladeschale der Basisstation abgelegt und aufgeladen. Da hier der Abstand der Antenne des Mobilteils von der Antenne des Basisteils oft nur wenige cm beträgt und da dieser Abstand andererseits an der Grenze der Zelle 50 bis 200 m beträgt, ist es klar, daß an den Empfänger hohe Dynamikanforderungen gestellt werden, um in beiden Grenzfällen eine einwandfreie Funktion zu gewährleisten. Die Erfüllung dieser Anforderungen führt naturgemäß zu höheren Kosten.

Aus der GB-2 296 628 A ist ein Verfahren zum Synchronisieren eines Mobilteils eines nach einem Multiplex-Verfahren arbeitenden Mobilfunksystems bekannt, bei dem zumindestens ein Träger bestimmter Leistung von verschiedenen Basisstationen ausgesendet wird und bei dem seitens des Mobilteils ein Träger gesucht wird, bis die Synchronisation mit der Basisstation erreicht ist, wobei das Mobilteil ständig einen Meßwert für die Empfangsfeldstärke ermittelt.

Aus der GB-2 293 947 A ist ein Mobilfunksystem bekannt, bei dem jede Mobilstation die Feldstärke von empfangenen Pilot- bzw. Synchronisationssignalen von Basisstationen mißt und die gemessenen Werte den Basisstationen mitteilt. Die Basisstationen messen ihrerseits die Entfernung zwischen der Basisstation und der Mobilstation aufgrund der von der Mobilstation zur Basisstation gesendeten Intensitätsfeldstärken, wählen bezogen auf die gemessene Entfernung aus einer Vielzahl von Zeitschlitzpaaren ein bestimmtes Zeitschlitzpaar aus und teilen das ausgewählte Zeitschlitzpaar der Mobilstation zu.

Aus der US-5,528,623 ist ein Schnurlostelefonsystem mit einer automatischen Steuerung der Sendeleistung und Sendefrequenz bekannt, bei dem die automatische Steuerung der Sendeleistung und der Sendefrequenz in Abhängigkeit von geänderten Übertragungsbedingungen erfolgt und auf Indikatoren über die Qualität einer Kommunikationsverbindung zwischen den fernen Mobilteilen und der Basisstation basiert.

Aus der EP-0 682 417 A2 ist ein Verfahren zum Steuern der Sendeleistung in einem "Spread-Spectrum"-Kommunikationssystem bekannt, bei dem die Sendeleistung in Abhängigkeit von der mit einem Steuerungsbit gesendeten Sendeleistung bestimmt wird.

Es ist eine Aufgabe der Erfindung, ein Verfahren zu schaffen, das den Einsatz von Empfängern in Mobilteilen ermöglicht, die mit einem geringeren Dynamikbereich im Hochfrequenzteil arbeiten und daher billiger sind.

Diese Aufgabe wird mit einem Verfahren der eingangs genannten Art gelöst, bei welchem erfindungsgemäß bei Überschreiten eines vorgebbaren Feldstärkemeßwertes seitens des Mobilteils eine Aufforderung an die Basisstation gesendet wird, und hierauf seitens der Basisstation ein weiterer Dummy Bearer reduzierter Leistung auf einem anderen Kanal ausgesendet wird.

Für die Durchführung dieses Verfahrens kann die üblicherweise in den Mobilteilen und Basisstationen vorhandene Software mitverwendet werden. Zusätzliche Hardware ist überhaupt nicht erforderlich, sodaß der angestrebte Kostenvorteil auch tatsächlich erzielbar ist.

Um Suchzeiten zu vermeiden bzw. zu verkürzen ist es zweckmäßig, wenn durch Informationsaustausch zwischen Mobilteil und Basisstation festgelegt wird, auf welchem Kanal der Dummy Bearer reduzierter Leistung gesendet wird.

Dabei besteht eine einfache Lösung darin, daß seitens des Mobilteils zusammen mit der Aufforderung mit einer Meldung ein neuer Kanal für den weiteren Dummy Bearer reduzierter Leistung bekanntgegeben wird.

Andererseits ist es ebenso möglich, daß seitens der Basisstation nach Erhalt der Aufforderung ein Kanal für den weiteren Dummy Bearer festgelegt und dieser Kanal mit einer Meldung dem Mobilteil bekanntgegeben wird.

Das Verfahren nach der Erfindung eignet sich besonders für ein Mobilfunksystem, welches nach einem FDMA/TDMA-Verfahren, insbesondere im DECT-Standard arbeitet.

Zur Lösung der Aufgabe eignet sich auch ein Mobilfunksystem der oben genannten Art, bei welchem erfindungsgemäß das Mobilteil zum Vergleich des Feldstärke-Meßwertes mit einem vorgebbaren Maximalwert sowie zur Aussendung einer Aufforderung bei Überschreiten des Maximalwertes eingerichtet ist und die Basisstation nach Empfang der Aufforderung zur Aussendung eines weiteren Dummy Bearers reduzierter Leistung auf einem anderen Kanal eingerichtet ist. Dadurch ergeben sich die bereits in Zusammenhang mit dem Verfahren erwähnten Vorteile.

Um Suchzeiten zu verkürzen zeichnet sich eine Weiterbildung der Erfindung dadurch aus, daß diese dazu eingerichtet ist, durch Informationsaustausch zwischen Mobilteil und Basisstation festzulegen, auf welchem Kanal der weitere Dummy Bearer reduzierter Frequenz gesendet wird.

Dabei kann mit Vorteil vorgesehen sein, daß das Mobilteil dazu eingerichtet ist, zusammen mit der Aufforderung mit einer Meldung einen neuen Kanal für den weiteren Dummy Bearer reduzierter Leistung bekanntzugeben oder daß die Basisstation dazu eingerichtet ist, nach Erhalt der Aufforderung einen Kanal für den weiteren Dummy Bearer festzulegen und diesen Kanal mit einer Meldung dem Mobilteil bekanntzugeben.

Die Vorteile der Erfindung kommen besonders bei einem Mobilfunksystem zur Geltung, welches ein FDMA/TDMA-System, insbesondere ein DECT-System ist.

Die Erfindung samt weiterer Vorteile ist im folgenden anhand einer beispielsweisen Ausführungsform näher erläutert, die in der Zeichnung veranschaulicht ist. In dieser zeigen
Fig.1a und 1b schematisch eine Basisstation, welche Dummy Bearer aussendet, mit zwei Mobilteilen,
Fig.2 in einem Blockschaltbild ein Mobilteil eines erfindungsgemäßen Mobilfunksystems und
Fig.3a und 3b anhand von Ablaufdiagrammen das erfindungsgemäße Verfahren.

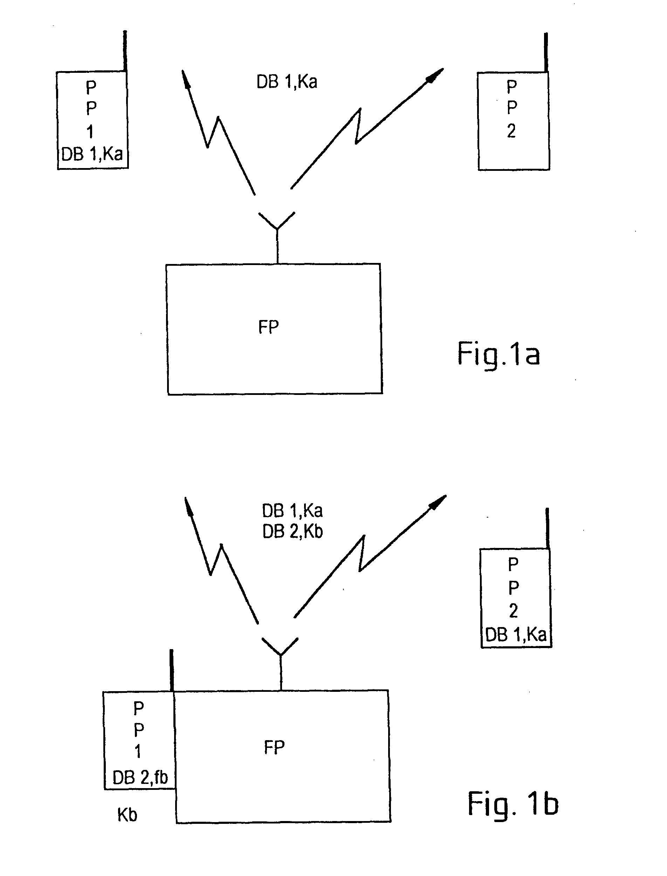

Gemäß Fig.1a und 1b ist eine Basisstation FP vorgesehen, die einen Dummy Bearer DB1 beispielsweise auf einem Kanal Kₐ ausstrahlt. Im DECT-System, welches ein FDMA/TDMA-System ist, wird dieser Dummy Bearer auf einer von 10 Frequenzen und dort in einem von 12 Zeitschlitzen ausgestrahlt, doch ist die Erfindung nicht auf dieses System beschränkt.

Das Mobilteil PP1 habe nach der Suche einer geeigneten Basisstation diese gefunden und sei auf den Dummy Bearer DB1 auf dem Kanal Kₐ aufsynchronisiert. Weitere Bedingungen für eine solche Synchronisation, wie die (teilweise) Übereinstimmung mit einer Identifizierung und das Vorhandensein einer Mindestfeldstärke sind hier nicht näher zu erläutern, da nicht erfindungswesentlich.

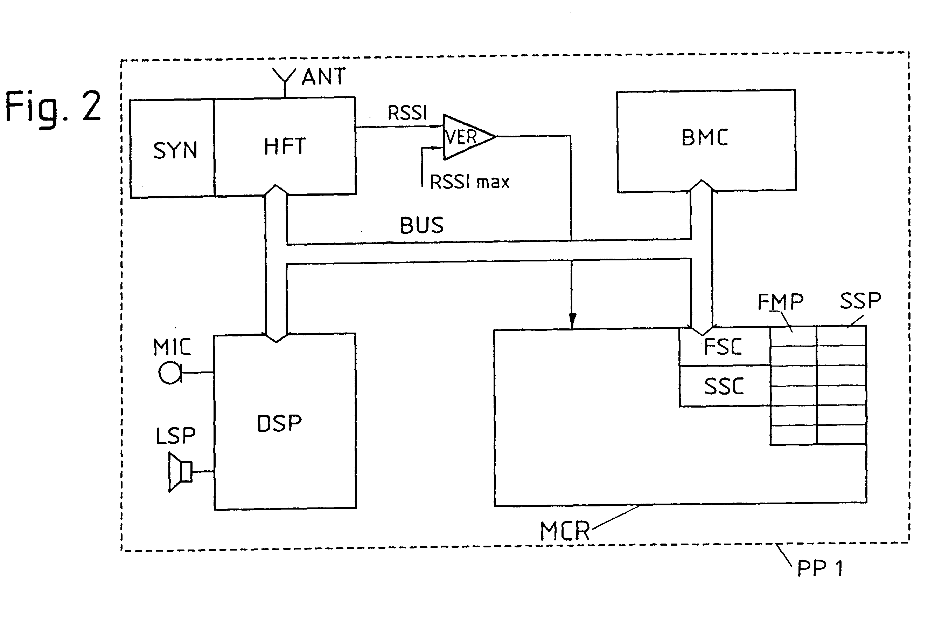

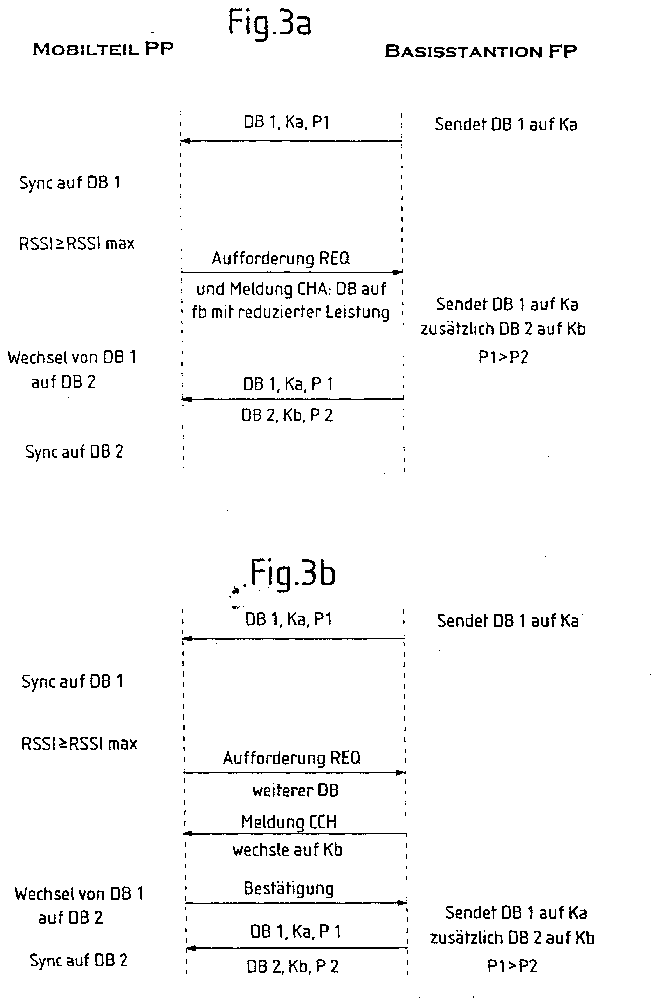

Gemäß Fig.1a befinden sich zwei Mobilteile PP1 und PP2 in größerer Entfernung von der Basisstation FP, was bei einem Schnurlostelefon beispielsweise 10 oder 20 m bedeuten kann. Wird nun das Mobilteil PP1 zur Basisstation FP gebracht, insbesondere um dort in einer Ladeschale abgelegt und aufgeladen zu werden, so steigt die Empfangsfeldstärke mit Annäherung der Antenne des Mobilteils an die Antenne der Basisstation stark an. Dies macht sich beispielsweise im DECT-System durch einen Anstieg des RSSI-Wertes (Radio Signal Strength Indicator) bemerkbar und sobald dieser Wert einen gewissen Maximalwert RSSIₘₐₓ überschreitet, sendet das Mobilteil eine Aufforderung REQ (siehe Fig.3a) an die Basisstation FP und gibt gleichzeitig oder darauffolgend eine Meldung CHA ab, wonach ein neuer Dummy Bearer auf einem anderen Kanal mit reduzierter Leistung erwünscht ist. Bezugnehmend auf Fig.2 sei kurz auf den prinzipiellen Aufbau eines Mobilteils PP1 eingegangen, welches einen HF-Teil HFT mit einer Antenne ANT und gegebenenfalls einem Frequenzsynthesizer SYN enthält, weiters einen Burst Mode Controller BMC, weiters einen Mikrocontroller MCR und einen digitalen Signalprozessor DSP zur Verarbeitung beispielsweise von Sprache oder anderen Daten. Ein Signalprozessor kann jedoch auch softwaremäßig in dem Mikrocontroller enthalten sein und ebensowenig muß nicht notwendigerweise ein Synthesizer vorhanden sein, sondern wesentlich ist eine Basisbandverarbeitung. Vorgesehen ist im allgemeinen Fall noch ein Mikrofon MIC und eine Hörkapsel LSP oder Lautsprecher. Der Datenverkehr innerhalb des Mobilteils verläuft im wesentlichen über einen Bus BUS und der Mikrocontroller enthält im vorliegenden Fall für seine Suchmechanismen beispielsweise einen Zeitschlitzspeicher SSP und einen Frequenzspeicher FMP sowie einen Frequenzscan FSC und einen Zeitschlitzscan SSC. Zum Vergleich des RSSI-Wertes mit einem Maximalwert RSSIₘₐₓ ist ein Vergleicher VER vorgesehen, der hier symbolisch eingezeichnet ist, tatsächlich jedoch erfolgt eine softwaremäßige Verarbeitung der entsprechenden Signale. Nicht eingezeichnet sind noch weitere, dem Fachmann geläufige Einzelheiten, wie z.B. eine Stromversorgungseinheit, eine Tastatur und eine Anzeige etc.

Nach Erhalt der oben genannten Meldung und Aufforderung sendet nun die Basisstation zusätzlich zu dem Dummy Bearer DB1 auf dem Kanal Kₐ einen weiteren Dummy Bearer DB2 auf dem Kanal K_{b}, wobei die Leistung P2 des zusätzlichen Dummy Bearers erheblich geringer als die Leistung des Dummy Bearers DB1 sein kann und soll. Nun kann das Mobilteil von dem Dummy Bearer DB1 auf den Dummy Bearer DB2 wechseln und sich auf diesen aufsynchronisieren, solange es nahe an der Basisstation ist bzw. sich in der Ladeschale befindet. Bei einer darauffolgenden größeren Entfernung von der Basisstation geht wegen zu geringer Feldstärke die Synchronisation auf den Dummy Bearer DB2 verloren und das Mobilteil kann sich dann entweder durch systematische Suche oder gezielt wieder auf den Dummy Bearer DB1 oder einen anderen Dummy Bearer aufsynchronisieren.

Bei der in Fig.3b gezeigten Variante erfolgt bei Erreichen bzw. Überschreiten eines maximalen RSSI-Wertes lediglich eine Aufforderung REQ an die Basisstation um einen weiteren Dummy Bearer. Die Basisstation kann nun einen zur Verfügung stehenden Kanal für den Dummy Bearer, hier z.B. den Kanal K_{b} aussuchen und eine Meldung CCH an das Mobilteil senden, wonach dieses auf den neuen Kanal f_{b} wechseln soll. Bei dieser Meldung kann wie auch bei anderen Meldungen eine Bestätigung vorgesehen sein, wonach die Basisstation, ebenso wie im Beispiel nach Fig.2a, zusätzlich zu dem Dummy Bearer DB1 auf dem Kanal Kₐ einen Dummy Bearer DB2 auf dem Kanal K_{b} sendet und auch hier wiederum die Leistung P2 des zusätzlichen Dummy Bearers kleiner als jene P1 des ursprünglichen Dummy Bearers ist. Das Mobilteil PP1 synchronisiert sich nun auf den Dummy Bearer DB2 auf dem Kanal FP, jedenfalls solange es sich in unmittelbarer Nähe der Basisstation befindet. Wie in Fig.1b skizziert, kann ein weiteres Mobilteil PP2 hingegen auf den Dummy Bearer DB1 auf dem Kanal Kₐ synchronisiert sein.

## Patentansprüche

1. Verfahren zum Synchronisieren eines Mobilteils (PP1) eines nach einem Multiplex-Verfahren arbeitenden Mobilfunksystems, bei welchem zumindest ein Dummy Bearer (DB1) bestimmter Leistung (P1) von einer Basisstation (FP) ausgesendet wird, und seitens des Mobilteils (PP1) ein Dummy Bearer (DB1) gesucht wird, bis Synchronisation mit der Basisstation erreicht ist, wobei das Mobilteil ständig einen Meßwert (RSSI) für die Empfangsfeldstärke ermittelt,
**dadurch gekennzeichnet, daß**
bei Überschreiten eines vorgebbaren Feldstärkemeßwertes (RSSIₘₐₓ) seitens des Mobilteils (PP1) eine Aufforderung (REQ) an die Basisstation (FP) gesendet wird, und hierauf seitens der Basisstation (FP) ein weiterer Dummy Bearer (DB2) reduzierter Leistung (P2) auf einem anderen Kanal (K_{b}) ausgesendet wird.

2. Verfahren nach Anspruch 1, **dadurch gekennzeichnet, daß** durch Informationsaustausch zwischen Mobilteil (PP) und Basisstation (FP) festgelegt wird, auf welchem Kanal der weitere Dummy Bearer (DB2) reduzierter Leistung gesendet wird.

3. Verfahren nach Anspruch 2, **dadurch gekennzeichnet, daß** seitens des Mobilteils (PP1) zusammen mit der Aufforderung (REQ) mit einer Meldung (CHA) ein neuer Kanal (K_{b}) für den weiteren Dummy Bearer (DB2) reduzierter Leistung (P2) bekanntgegeben wird.

4. Verfahren nach Anspruch 2, **dadurch gekennzeichnet, daß** seitens der Basisstation (FP) nach Erhalt der Aufforderung (REQ) ein Kanal (K_{b}) für den weiteren Dummy Bearer (DB) festgelegt und dieser Kanal mit einer Meldung (CCH) dem Mobilteil (PP1) bekanntgegeben wird.

5. Verfahren nach einem der Ansprüche 1 bis 4, bei welchem das Mobilfunksystem nach einem FDMA/TDMA-Verfahren, insbesondere im DECT-Standard arbeitet.

6. Mobilfunksystem, welches nach einem Multiplex-Verfahren arbeitet, mit zumindest einer Basisstation (FP) und zumindest einem Mobilteil (PP1, PP2), bei welchem die Basisstation zur Aussendung zumindest eines Dummy Bearers in einem Kanal aus einer Anzahl von Kanälen eingerichtet ist, und bei welchem jeder Mobilteil (PP1) einen HF-Teil (HFT), einen Burst Mode Controller (BMC) und einen Mikrocontroller (MCR) aufweist und dazu eingerichtet ist, einen Dummy Bearer (DB) geeigneter Identität zu suchen, bis es auf diesen Dummy Bearer aufsynchronisiert ist,
**dadurch gekennzeichnet, daß**
das Mobilteil (PP1) zum Vergleich des Feldstärke-Meßwertes (RSSI) mit einem vorgebbaren Maximalwert (RSSIₘₐₓ) sowie zur Aussendung einer Aufforderung (REQ) bei Überschreiten des Maximalwertes eingerichtet ist und
die Basisstation (FP) nach Empfang der Aufforderung (REQ) zur Aussendung eines weiteren Dummy Bearers (DB2) reduzierter Leistung (P2) auf einem anderen Kanal (K_{b}) eingerichtet ist.

7. Mobilfunksystem nach Anspruch 6, **dadurch gekennzeichnet, daß** es dazu eingerichtet ist, durch Informationsaustausch zwischen Mobilteil (PP1) und Basisstation (FP) festzulegen, auf welchem Kanal der weitere Dummy Bearer (DB2) reduzierter Frequenz gesendet wird.

8. Mobilfunksystem nach Anspruch 6, **dadurch gekennzeichnet, daß** das Mobilteil (PP1) dazu eingerichtet ist, zusammen mit der Aufforderung (REQ) mit einer Meldung (CHA) einen neuen Kanal (K_{b}) für den weiteren Dummy Bearer (DB2) reduzierter Leistung bekanntzugeben.

9. Mobilfunksystem nach Anspruch 6, **dadurch gekennzeichnet, daß** die Basisstation (FP) dazu eingerichtet ist, nach Erhalt der Aufforderung (REQ) einen Kanal (K_{b}) für den weiteren Dummy Bearer (DB2) festzulegen und diesen Kanal mit einer Meldung (CCH) dem Mobilteil (PP1) bekanntzugeben.

10. Mobilfunksystem nach einem der Ansprüche 6 bis 8, **dadurch gekennzeichnet, daß** es ein FDMA/TDMA-System, insbesondere ein DECT-System ist.

## Claims

1. Method for synchronization of a mobile part (PP1) of a mobile radio system which operates using a multiplexing method, in which at least one dummy bearer (DB1) is transmitted at a specific power level (P1) by a base station (FP), and the mobile part (PP1) searches for a dummy bearer (DB1) until synchronization with the base station is achieved, with the mobile part continuously determining a measured value (RSSI) for the reception field strength
characterized in that,
if the mobile part (PP1) exceeds a field strength measured value (RSSIₘₐₓ) which can be predetermined, a request (REQ) is sent to the base station (FP) and, in response to this, the base station (FP) transmits a further dummy bearer (DB2) at a reduced power level (P2) on another channel (K_{b}).

2. Method according to Claim 1, characterized in that an information interchange between the mobile part (PP) and the base station (FP) is used to define the channel on which the further dummy bearer (DB2) at a reduced power level is transmitted.

3. Method according to Claim 2, characterized in that, together with the request (REQ), the mobile part (PP1) uses a message (CHA) to notify a new channel (K_{b}) for the further dummy bearer (DB2) at a reduced power level (P2).

4. Method according to Claim 2, characterized in that, on receiving the request (REQ), the base station (FP) defines a channel (K_{b}) for the further dummy bearer (DB), and this channel is notified to the mobile part (PP1) by means of a message (CCH).

5. Method according to one of Claims 1 to 4, in which the mobile radio system operates using an FDMA/TDMA method, in particularly using the DECT Standard.

6. Mobile radio system which operates using a multiplexing method, having at least one base station (FP) and at least one mobile part (PP1, PP2), in which the base station is set up to transmit at least one dummy bearer in one channel from a number of channels, and in which each mobile part (PP1) has an RF section (HFT), a burst mode controller (BMC) and a microcontroller (MCR) and is set up to search for a dummy bearer (DB) with a suitable identity until it is synchronized to this dummy bearer,
characterized in that
the mobile part (PP1) is set up to compare the field strength measured value (RSSI) with a maximum value (RSSIₘₐₓ) which can be predetermined, and to transmit a request (REQ) if the maximum value is exceeded, and
the base station (FP) is set up to transmit a further dummy bearer (DB2), at a reduced power level (P2), on another channel (K_{b}) after receiving the request (REQ).

7. Mobile radio system according to Claim 6,
characterized in that said system is set up to use an information interchange between the mobile part (PP1) and the base station (FP) to define the channel on which the further dummy bearer (DB2) at a reduced frequency is transmitted.

8. Mobile radio system according to Claim 6,
characterized in that the mobile part (PP1) is set up to notify a new channel (K_{b}) for the further dummy bearer (DB2) at a reduced power level using a message (CHA) together with the request (REQ).

9. Mobile radio system according to Claim 6, characterized in that the base station (FP) is set up to define a channel (K_{b}) for the further dummy bearer (DB2) after receiving the request (REQ), and to notify this channel to the mobile part (PP1) using a message (CCH).

10. Mobile radio system according to one of Claims 6 to 8, characterized in that said system is an FDMA/TDMA system, in particular a DECT system.

## Revendications

1. Procédé de synchronisation d'une partie (PP1) mobile d'un système de radiocommunications mobile travaillant suivant un procédé multiplex, dans lequel au moins un dummy bearer (DB1) de puissance (P1) déterminée est émis par une station (FP) de base et dans lequel il est cherché du côté de la partie (PP1) mobile un dummy bearer (DB1) jusqu'à ce que la synchronisation avec la station de base soit atteinte, la partie mobile déterminant en permanence une valeur (RSSI) de mesure pour l'intensité de champ de réception, caractérisé en ce que, en cas de dépassement d'une valeur (RSSiₘₐₓ) d'intensité de champ pouvant être prescrite à l'avance, il est émis du côté de la partie (PP1) mobile une invitation (REQ) adressée à la station (FP) de base et, à la suite de cela, il est émis de la part de la station (FP) de base un dummy bearer (DB2) supplémentaire de puissance (P2) réduite sur une autre voie (K_{b}).

2. Procédé suivant la revendication 1, caractérisé en ce qu'il est fixé par échange d'informations entre la partie (PP) mobile et la station (FP) de base la voie sur laquelle le dummy bearer (DB2) supplémentaire de puissance réduite est émis.

3. Procédé suivant la revendication 2, caractérisé en ce qu'il est donné connaissance par la partie (PP1) mobile d'une nouvelle voie (K_{b}) pour le dummy bearer (DB2) supplémentaire de puissance (P2) réduite conjointement avec l'invitation (REQ), par un message (CHA).

4. Procédé suivant la revendication 2, caractérisé en ce que, du côté de la station (FP) mobile, après réception de l'invitation (REQ), il est fixé une voie (K_{b}) pour le dummy bearer (DB) supplémentaire et il est donné connaissance à la partie (PP1) mobile de cette voie par un message (CCH).

5. Procédé suivant l'une des revendications 1 à 4, dans lequel le système de radiocommunications mobile travaille suivant un procédé (FDMA/TDMA), notamment dans la norme (DECT).

6. Système de radiocommunications mobile qui travaille suivant un procédé multiplex, qui comporte au moins une station (FP) de base et au moins une partie (PP1, PP2) mobile, dans lequel la station de base est aménagée pour émettre au moins un dummy bearer dans une voie parmi une pluralité de voies, et dans lequel chaque partie (PP1) mobile comporte une partie (HFT) haute fréquence, un contrôleur (DMC) Burst Mode et un microcontrôleur (MCR) et est aménagée pour rechercher un dummy bearer (DB) d'identité appropriée jusqu'à ce qu'il soit synchronisé sur ce dummy bearer, caractérisé en ce que la partie (PP1) mobile est aménagée pour comparer la valeur (RSSI) de mesure d'intensité de champ à une valeur (RSSIₘₐₓ) maximale pouvant être prescrite à l'avance ainsi que pour émettre une invitation (REK) en cas de dépassement de la valeur maximale et en ce que la station (FP) de base est aménagée pour, après réception de l'invitation (REQ), à émettre un dummy bearer (DB2) supplémentaire de puissance (P2) réduit sur une autre voie (K_{b}).

7. Système de radiocommunications mobile suivant la revendication 6, caractérisé en ce qu'il est aménagé pour fixer par échange d'informations entre la partie (PP1) mobile et la station (FP) de base le canal sur lequel le dummy bearer (DB2) supplémentaire de fréquence réduite est envoyé.

8. Système de radiocommunications mobile suivant la revendication 6, caractérisé en ce que la partie (PP1) mobile est aménagée pour donner connaissance d'une nouvelle voie (K_{b}) pour le dummy bearer (DB2) supplémentaire de puissance réduite conjointement avec l'invitation (REQ), par un message (CHA).

9. Système de radiocommunications mobile suivant la revendication 6, caractérisé en ce que la station (FP) de base est aménagée pour, après réception de l'invitation (REQ), fixer une voie (K_{b}) pour le dummy bearer (DB2) supplémentaire et donner connaissance à la partie (PP1) mobile de cette voie par un message (CCH).

10. Système de radiocommunications mobile suivant l'une des revendications 6 à 8, caractérisé en ce qu'il est un système (FDMA/TDMA), notamment un système (DECT).
